(19) Europäisches Patentamt
European Patent Office
Office européen des brevets

(11) Publication number : **0 499 387 A2**

(12) **EUROPEAN PATENT APPLICATION**

(21) Application number : **92300827.0**

(22) Date of filing : **31.01.92**

(51) Int. Cl.$^5$ : **C08L 101/00**, C08L 67/03

(30) Priority : **13.02.91 US 654853**

(43) Date of publication of application : **19.08.92 Bulletin 92/34**

(84) Designated Contracting States : **AT BE CH DE DK ES FR GB GR IT LI LU MC NL PT SE**

(71) Applicant : **BP AMERICA INC.**
**200 Public Square 7A**
**Cleveland Ohio 44114 2375 (US)**

(72) Inventor : **Coffey, Gerald P.**
**5264 Ashwood Drive**
**Lyndhurst, Ohio 44124 (US)**
Inventor : **Perec, Elena S.**
**28110 Belcourt Road**
**Pepper Pike, Ohio 44124 (US)**
Inventor : **Melamud, Lucy**
**23372 Wendover Drive**
**Beachwood, Ohio 44122 (US)**

(74) Representative : **Crack, Richard David et al**
**c/o The British Petroleum Company plc**
**Patents Division Chertsey Road**
**Sunbury-on-Thames Middlesex, TW16 7LN (GB)**

(54) **Polymer composites of thermoplastic and liquid crystal polymers and a process for their preparation.**

(57) Polymer composites comprising a matrix of at least one thermoplastic polymer, such as high density polyethylene, in which at least one liquid crystal polymer, such as a thermotropic wholly aromatic polyester, is substantially uniformly dispersed at a concentration of less than about 2 wt % based on the weight of the polymer composite are prepared by a process comprising blending the thermoplastic polymer with less than about 2 wt % of the liquid crystal polymer at a temperature at which the thermoplastic polymer is molten and the liquid polymer is solid. In one embodiment, the polymer composites are prepared by first blending the thermoplastic polymer with more than about 2 wt % liquid crystal polymer at a temperature at which the thermoplastic polymer is molten and the liquid crystal polymer is solid to form a masterbatch in which the liquid crystal polymer is substantially uniformly dispersed throughout the thermoplastic polymer, and second diluting the concentration of the liquid crystal polymer in the masterbatch to less than about 2 wt % by adding more thermoplastic polymer to the masterbatch again at a temperature at which the thermoplastic polymer is molten and the liquid crystal polymer is solid.

EP 0 499 387 A2

## BACKGROUND OF THE INVENTION

### 1. Field of the Invention

This invention relates to polymer composites and a process for preparing same. In one aspect, the invention relates to polymer composites comprising a matrix of at least one thermoplastic polymer, such as a polyolefin, and at least one liquid crystal polymer (LCP), such as a thermotropic aromatic polyester. In another aspect, the invention relates to a process of preparing polymer composites containing relatively small amounts (less than about 2 weight percent) of LCP by first blending together a thermoplastic polymer and an LCP, and subsequently diluting the amount of LCP in the blend with more thermoplastic polymer.

### 2. Description of the Prior Art

Composites of a thermoplastic polymer and a reinforcing agent are highly desirable materials because they often exhibit tensile strength and chemical resistance properties that are superior to those exhibited by the thermoplastic polymer alone. In particular, the ultimate strength and modulus of a thermoplastic polymer often can be increased by incorporating into the polymer a fibrous material, such as glass fibers. However, the presence of solid fibers during processing often produces major difficulties in the melt-fabrication of shaped or molded parts. The addition of such fibers increases the viscosity of the system, and this in turn can increase the abrasive wear of the surfaces of the processing equipment. This not only results in shorter equipment life, but also increases the energy demands on the process itself. As a consequence, composites based on thermoplastic polymers ideally contain as little fibrous material as needed to obtain the desired physical and chemical properties, but achieving substantially uniform dispersion of the fibers within the thermoplastic matrix when the fiber is present in relatively small amounts, i.e. less than about 2 wt % based on the weight of the composite, is difficult at best. Efforts to achieve good dispersion often lead to over-blending the components, which in turn can lead to fiber breakage and/or degradation of the thermoplastic polymer, either of which results in a composite of inferior quality.

Polymer composites comprising a matrix of a thermoplastic polymer in which at least one LCP is dispersed are known in the art. For example, Isayev and Modic teach in USP 4,728,698 self-reinforced polymer composites of a base polymer admixed with a melt-processable LCP. The base polymer is a conventional thermoplastic, such as polycarbonate, and the LCP is a polymer, such as a wholly aromatic copolyester, which exhibits anisotropic properties in the melt phase. The polymers are blended at a temperature at which the base polymer flows readily and the LCP is above its melting point. The self-reinforced polymer composite comprises between about 2 and 20% by weight of LCP which is in the form of essentially unidirectional oriented continuous fibers distributed in a matrix of the base polymer.

Cogswell et al. teach in USP 4,386,174 and 4,438,236 a melt-processable composition comprising at least one polymer capable of forming an anisotropic melt and at least one other melt-processable polymer characterized in that the temperature range over which the polymer can form an anisotropic melt overlaps the temperature range at which the melt-processable polymer may be melt processed. The polymer capable of forming an anisotropic melt is a LCP while the melt-processable polymer is typically a conventional thermoplastic polymer such as a polyolefin, an acrylic polymer, polystyrene, or the like.

Froix teaches in USP 4,460,735 a polymer blend which is capable of exhibiting an anisotropic melt phase comprising 5 to 75% by weight, based upon the total weight of the blend, of a polycarbonate and the remainder of a melt-processable, wholly aromatic polyester which is capable of forming an anisotropic melt phase apart from the blend.

The increasing interest in the use of LCPs, as evidenced by the teachings described above, as a fibrous filler for thermoplastic polymers is due to the rigid-rod nature of their molecular backbones and their liquid crystalline order in the melt state. LCPs can impart a high degree of molecular orientation to a product made by melt processing. However, the very properties that make these materials desirable also make them difficult to blend with many kinds of thermoplastic polymers. LCPs generally have melting points significantly higher than the thermoplastic polymer with which they are to be blended, and they (the LCPs) are often immiscible with the thermoplastic polymer. Moreover, because the thermoplastic polyolefins already constitute such a huge commercial market, efforts to improving their physical and chemical properties must take into consideration the use of using existing melt processing equipment.

## SUMMARY OF THE INVENTION

According to this invention, polymer composites comprising a matrix of at least one thermoplastic polymer

in which at least one LCP is substantially uniformly dispersed at a concentration of less than about 2 wt % based on the weight of the polymer composite are prepared by a process comprising blending at least one thermoplastic polymer with less than about 2 wt % of at least one LCP at a temperature at which the thermoplastic polymer is molten and the LCP is solid. In one embodiment, the polymer composites of this invention are prepared by:

A) Blending at least one thermoplastic polymer with a sufficient amount of at least one LCP such that the resulting blend contains at least about 2 wt % of the LCP, the blending of the thermoplastic polymer and LCPs occurring at a temperature at which the thermoplastic polymer is molten and the LCP is solid such that the LCP is substantially uniformly dispersed throughout the thermoplastic polymer; and

B) Diluting the concentration of the LCP in the blend of (A) to less than about 2 wt % by adding more thermoplastic polymer to the blend of (A) at a temperature at which the thermoplastic polymer is molten and the LCP is solid such that the LCP is substantially uniformly dispersed throughout the thermoplastic polymer.

The dilution step of this particular embodiment can be performed in a single step or through a series of steps.

## DETAILED DESCRIPTION OF THE INVENTION

### 1. Thermoplastic Polymers

The thermoplastic polymers that can be used in this invention include virtually all polymers which meet the generally accepted definition of thermoplastic, i.e. a polymer that softens when exposed to heat and returns to its original condition upon cooling. The thermoplastic polymers described in USP 4,728,698, 4,386,174 and 4,438,174 exhibit this property, and are incorporated into this specification by reference.

Representative thermoplastic polymers include such polymers as polyolefins, polyvinyl halides, nylons (both crystalline and amphorous polyamides), polyesters, polyfluorocarbons, polyimides, polyphenylene oxide, polyketone, polyetherketone, polyphenylene sulfides, polyethylene vinyl alcohol, polyether imide, polycarbonates, polyurethanes, polystyrene, the acrylic and methacrylic resins, high nitrile resins, and the various blends of any two or more of these polymers. Preferred thermoplastic polymers are the polyolefins of which high density polyethylene (HDPE), medium density polyethylene, ultra-high molecular weight polyethylene, linear low-density polyethylene, low-density polyethylene, very low density polyethylene, polypropylene, ethylene-propylene copolymers, and poly(4-methyl-1-pentene) or blends thereof are exemplary. The various polyethylenes and polypropylene are particularly preferred thermoplastic polymers.

### 2. Liquid Crystal Polymers

Liquid crystals are well known in the art (see for example "Liquid Crystals" in Kirk-Othmer's 3rd Edition of Encyclopedia of Chemical Technology, Vol. 14 at pp 395-427, Wiley-Interscience, 1981), and those used in this invention are polymeric. Virtually any LCP that exists as an anisotropic fluid between the boundaries of the solid and conventional isotropic liquid phase can be used in this invention.

Representative of these polymers are those based on an aromatic backbone linkage, such as the polyesters

(I) 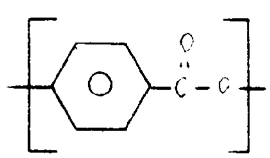

the polyethers

(II) 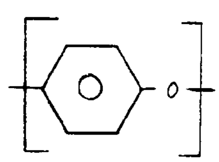

and the many variations that can be made on these basic repeating units. Aromatic diols, dicarboxylic acids and hydroxy acids can be used to form LCP copolyesters. Commercially available LCPs include a family of copolyesters sold under the trademark Vectra™ (available from the Celanese Research Company). These LCPs are believed to be synthesized from terephthalic acid, hydroxybenzoic acid, 6-hydroxy-2-naphthoic acid or their derivatives. Other examples of commercially available LCPs include Ekonol™ (an engineering plastic composed of poly-p-oxybenzoate manufactured and sold by Sumitomo Chemical), Xydar™ (a polymer based on p,p-biphenylhydroxybenzoic acid, terephthalic acid and its derivatives manufactured and sold by Dartco), and Rodrun™ (a polymer based on p-hydroxybenzoic acid and polyethylene terephthalate, manufactured and sold by Unitika). These and other LCPs that can be used in the practice of this invention are also described in USP 4,728,698, 4,386,174 and 4,438,236 and the references cited in each of them, all of which are incorporated here by reference.

3. Polymer Composites

The polymer composites of this invention contain less than about 2 wt %, preferably less than about 1 wt %, of an LCP substantially uniformly dispersed within a thermoplastic resin matrix. These polymer composites not only demonstrate superior tensile strength and impact and chemical resistance, but they also are more facile to prepare. Because the polymer composites of this invention can be prepared at temperatures at which the LCP remains solid, the composites can be prepared at a temperature lower than the melt point of the LCP, and this results generally in less, if any, degradation to the thermoplastic polymer, less energy consumption in the manufacturing process, and/or less physical wear on the manufacturing equipment (e.g. blenders, extruders, etc.). Moreover, the polymer composites of this invention generally exhibit comparable or superior mechanical and chemical properties to composite blends containing 2% or more LCP within their thermoplastic resin matrix.

Of particular interest are polymer composites comprising a blend of one or more polyolefins with about 2 wt % or less of one or more copolyester LCPs, such as those of the Vectra™ family. Of particular interest are those polymer composites in which the polyolefin is a high density polyethylene or polypropylene. Other polymer composites of interest include blends of nitrile polymers, such as those of the Barex™ family (produced and sold by BP Chemicals Inc.) and Rodrun™ LCPs, and polystyrene blended with the copolyester LCPs of the Vectra™ family.

4. Blending Procedure

Broadly, the polymer composites of this invention can be prepared by blending at least one thermoplastic polymer with less than about 2 wt % of at least one LCP at a temperature at which the thermoplastic polymer is molten and the LCP is solid. This procedure lends itself well to those situations where a relatively large amount of polymer composite is to be prepared, e.g. in large commercial operations. Under these circumstances, good blending (as evidenced by the substantial, uniform dispersion of the LCP in the thermoplastic matrix) can be achieved directly, due principally to the size of the equipment used to blend the thermoplastic polymer and LCP. If adequate dispersion of the LCP within the thermoplastic resin is not obtained in a single mixing operation, the process can be repeated as often as necessary to obtain the desired dispersion. These repetitions are possible because the blending is done at a temperature at which the LCP is a solid and blending at such temperatures results generally in less degradation or decomposition of the thermoplastic polymer.

In those situations where the amount of polymer composite to be prepared does not lend itself to the use of large-scale blending equipment in which substantially uniform dispersion of the LCP within the thermoplastic resin matrix can be obtained directly from one or several blending operations, then a preferred procedure is to first blend at least one thermoplastic polymer with a sufficient amount of at least one LCP such that the resulting blend contains at least about 2 wt %, preferably at least about 5 wt % and more preferably at least about 10 wt %, of the LCP, this blend known as a masterbatch, and then diluting the concentration of the LCP in the masterbatch to less than about 2 wt % by adding more thermoplastic polymer to the masterbatch. Both the formation of the masterbatch and the dilution to the desired LCP concentration within the thermoplastic polymer matrix is done at a temperature at which the thermoplastic polymer is molten and the LCP is solid. If desired, both the steps of forming the masterbatch and its subsequent dilution can be repeated. Moreover, the dilution step can be expanded into a series of steps in which the LCP concentration within the blend is repeatedly reduced, e.g. diluting a masterbatch with a thermoplastic polymer/LCP weight ratio of 90/10 to 99/1 to 99.9/0.1, etc., by the incremental addition of thermoplastic polymer to each blend.

Although the exact conditions under which the thermoplastic polymer and LCP are blended will vary with the nature of the individual components, the basic sequence of the process is the same regardless of the components. First, the thermoplastic polymer is blended with the LCP at a temperature such that both the thermoplastic polymer is molten and the LCP is solid to form a first blend or composite of thermoplastic polymer and LCP, i.e. the masterbatch. The relative amounts of thermoplastic polymer and LCP can vary although the final composition of the first composite contains at least about 2 wt %, preferably at least about 5 wt % and more preferably at least about 10 wt %, based on the weight of the composite, of the LCP.

The first composite or masterbatch is then blended with additional thermoplastic polymer such that the amount or concentration of LCP, on a weight basis, in the masterbatch is reduced. The masterbatch and additional thermoplastic polymer also are blended at a temperature such that the thermoplastic polymer is molten and the LCP is solid. This second dilution step can be subdivided into a sequence of dilution steps by which the amount of LCP in the masterbatch is reduced finally to a predetermined level that is less than 2 wt % based on the weight of the final composite.

The thermoplastic polymer and LCP are blended at a temperature such that not only are both melt-processable, but the resulting composite has a substantially uniform dispersion of the LCP in the matrix form by the thermoplastic polymer. Previous to this invention when relatively low concentrations, e.g. less than about 2 wt %, of LCP were desired, extended mixing times or repeated passes through a mixer or extruder were used to insure adequate dispersion. Where the thermoplastic polymer and LCP had relatively close melting points, e.g. within about 70°C of each other, this was accomplished by conventional blending techniques, e.g. introducing the desired amount of each component into a mixing apparatus, such as a Brabender mixer attached to single screw extruder, and then mixing both components at a temperature sufficient to render both moltened for a sufficient period of time to insure uniform blending. However, when a thermoplastic polymer with a relatively low melting point (e.g. high density polyethylene, 130°C) was to be blended with an LCP that had a melting point significantly higher (e.g. Vectra™ A950, 283°C), the thermoplastic polymer would undergo considerable degradation during its residence time within the mixer or extruder. The resulting polymer composite would thus contain undesirably large amounts of degraded thermoplastic polymer, and this was reflected in its relatively poor tensile strength and impact and chemical resistance properties.

In contrast, by blending the LCP with the thermoplastic polymer by the dilution process of this invention, a highly desirable product can be made. By blending the polymers at a temperature at which the polymer with the higher melting point, almost always the LCP, is solid yet still melt-processable and in a staged progression, the need for an extended residence time in a heated mixer or extruder is eliminated. This in turn eliminates or greatly reduces the opportunity for degradation or decomposition of the polymer which melts at the lower temperature, almost always the thermoplastic polymer.

While the thermoplastic polymer and LCP are blended at a temperature at which the thermoplastic polymer is molten and the LCP is solid, the temperature is sufficient that both are melt-processable. The optimal temperature will vary with, among other parameters, the nature of the components to be blended, the relative amounts of each, the type and size of the mixing equipment, and the effective shear rate. Typically, the optimal temperature for blending the components of the composite is at or near the temperature at which the torque required to mix or extrude the blend is less than the torque required to mix or extrude the thermoplastic polymer alone. For example, approximately 6700 mg of torque are required to extrude unmodified or neat HDPE from a Model 81430 Brabender twin screw extruder maintained at 242°C and operated at 40 rpms, while 6800 mg of torque are required to extrude a 90/10 weight ratio blend of HDPE and Vectra™ A950 LCP. However, at 252°C, only 6000 mg of torque are required to extrude the blend while 6100 mg of torque are required to extrude the unmodified or neat HDPE. This difference in torque requirement expands as the temperature approaches the melt point of the Vectra™ LCP, but blending of the HDPE and Vectra™ LCP at the lower temperature (here 252°C) is preferred because less HDPE is likely to degrade at 252°C than at 282°C under similar conditions.

The shear rate, expressed either directly in reciprocal seconds or indirectly in rpms of the screw or screws of an extruder or blades of a mixer, can vary but typically a relatively low blending temperature is complimented by a relatively high shearing rate. Conversely, the higher the blending temperature, the less need for a relatively high shearing rate to obtain a substantially uniform dispersion of the LCP within the thermoplastic polymer matrix. The shearing rate is ultimately a function of the temperature at which the thermoplastic polymer and LCP are blended, and it is chosen not only to insure substantially uniform dispersion of the LCP within the thermoplastic polymer matrix, but also to maximize blending efficiency without degradation to either the thermoplastic polymer or the LCP.

As noted above, the blending temperature is also a function of the relative amounts of each component to be blended. The more LCP present in the blend, particularly when the melt temperature of the LCP is more than about 70°C greater than the melt temperature of the thermoplastic polymer, the more advantageous it is to employ a blending temperature near, but less, than the melt temperature of the LCP. This situation is most frequently encountered in the first step of the dilution process of this invention, i.e. in the formation of the masterbatch. In those instances where the LCP represents less than about 10 wt % of the polymer composite or blend, the blending temperature is usually at or near the temperature at which more torque is required to blend

or extrude the thermoplastic polymer neat than to mix or extrude the blend.

The thermoplastic polymer and LCP can be blended or mixed by any means that will yield a polymer composite in which the LCP is substantially uniformly dispersed throughout the thermoplastic polymer. Typical mixing apparatus include static mixers and twin screw extruders. Single screw extruders can be used either alone or in combination with a static mixer but these tend to be less efficient than twin screw extruders.

In a typical embodiment of this invention, the thermoplastic polymer and LCP are fed in solid form, typically in the shape of pellets, into a mixing apparatus, typically a twin screw extruder. The components are either heated to near the blending temperature at the time of their introduction into the mixing apparatus or are heated within the mixing apparatus before being subjected to blending action. Once the components have reached the blending temperature, they are maintained at this temperature until the blending has been completed. The residence time of the components at the blending temperature is kept to as short a time as possible to avoid degradation of the lower melting component.

The thermoplastic polymer - LCP blend is discharged from the mixing apparatus, usually by extrusion and if by extrusion, the shape of which will conform to the shape of the dye through which it is extruded. The polymer composite will contain the LCP substantially uniformly dispersed throughout the thermoplastic polymer. By "substantially uniformly dispersed" and similar terms is meant that the LCP is dispersed within the thermoplastic polymer matrix such that few, if any, LCP clusters are visually detectable either by the unaided eye or by optical microscopy up to 250 magnification.

The hallmarks of the polymer composites produced by this invention are their excellent tensile strength and impact and chemical resistance properties. Relatively small amounts of LCP incorporated into a matrix of thermoplastic polymer result in a polymer composite demonstrating essentially all of the desirable characteristics of the thermoplastic polymer yet having markedly enhanced tensile and modulus strength characteristics, particularly break elongation. The polymer composites also exhibit enhanced chemical and impact resistance characteristics.

The following examples are illustrative of certain specific embodiments of this invention. Unless indicated to the contrary, all parts and percentages are by weight.

SPECIFIC EMBODIMENTS

Example 1: Masterbatch Preparation (HDPE/Vectra™ A950 LCP)

High density polyethylene (HDPE) (Dow 62013) (weight average molecular weight of about 100,000, a melting temperature of about 130°C, and a density of 0.9495 g/cm$^3$) and Vectra™ A950 (a copolymer of 6-hydroxy-2-naphthoic acid and hydroxybenzoic acid, melting temperature of 283°C, and available from Celanese Research Company, Summit, New Jersey) were dried under vacuum for about 24 hours. The HDPE was dried at a temperature of 50°C while the Vectra™ LCP was dried at 100°C. Both were in the form of pellets having the approximate dimensions of 0.15″ x 0.09″.

The HDPE and Vectra™ were then blended into a masterbatch by first manually mixing the dried pellets at a 9:1 weight ratio of HDPE to Vectra™ LCP, and then feeding the mixture to a Model 81430 Brabender twin screw extruder maintained at 270°C and fitted with a high shear mixing screw that rotated at 30 rpms (which is an effective shear rate of 84-125 reciprocal seconds over an output range of 2-3 lbs/hr). The extruder had a length to diameter ratio of 25, and was equipped with a die assembly for the production of a continuous strand. As the 90/10 masterbatch was extruded through the die, it was immediately cut into pellets of approximately 0.14″ x 0.10″ in size, collected, and then passed through the Brabender mixer a second time under similar conditions as the first pass, and again collected as pellets. The Vectra™ LCP was found to be substantially uniformly dispersed throughout the HDPE matrix as characterized by the substantial absence of detectable (to the unaided eye) LCP domains (e.g. clusters of LCP) on the surface of the pellet. In addition, the HDPE matrix showed little or no visible evidence of degradation.

Other 90/10 HDPE/Vectra™ LCP masterbatches were also prepared using the procedure described above except that the extruder was operated at 40 rpms and the extruder temperature varied between 242°C and 282°C. In each instance the masterbatch pellets were inspected by unaided eye, and the Vectra™ LCP was found to be substantially uniformly dispersed throughout the HDPE matrix. In addition, films were pressed from pellets and inspected for the LCP dispersion using a Leitz optical microscope (x40). Also the HDPE matrix showed little or no visible evidence of degradation. Moreoever, the amount of torque required to extrude the blend of HDPE and Vectra™ LCP was less than the amount of torque required to extrude HDPE alone. Figure 1 demonstrates this reduction in torque over a relatively broad temperature regime, with a substantial reduction in torque over the temperature range of 270-283°C. This reduction in torque is evidence of a substantial modification of the fundamental crystalline properties of the HDPE matrix.

Example 2: Dilution Procedure

The 90/10 weight ratio masterbatches of HDPE and Vectra™ A950 LCP were prepared following the procedure of Example 1, and were then used as the starting material for preparing polymer composites with the following HDPE/Vectra™ LCP weight ratios:

TABLE 1

HDPE/Vectra™ A950 LCP Composites After Dilution

| MasterBatch | After First Dilution | After Second Dilution |
|---|---|---|
| 90/10 | 97/3 | - |
| 90/10 | 98/2 | - |
| 90/10 | 98.5/1.5 | - |
| 90/10 | 99/1 | - |
| 90/10 | 95/5 | 99.2/0.8 |
| 90/10 | 95/5 | 99.5/0.5 |
| 90/10 | 99/1 | 99.8/0.2 |
| 90/10 | 99.5/0.5 | 99.95/0.05 |
| 90/10 | 99.9/0.1 | 99.99/0.01 |

The polymer composites of the first dilution were prepared by blending appropriate amounts of masterbatch with additional HDPE to obtain polymer composites with the HDPE/Vectra™ A950 LCP weight ratios as indicated in the "After First Dilution" column. The same procedure that was used to prepare the masterbatch was used to prepare the polymer composites of the first dilution except that a much lower and broader temperature regime was employed, i.e. 180-280°C. The Brabender extruder was operated at 40 rpm.

Figure 2 demonstrates that the torque required to extrude a 99/1 blend of HDPE/Vectra™ A950 LCP, as compared to HDPE neat, was much less over a much lower and broader temperature regime than that required for the preparation of the 90/10 masterbatch. This in turn is evidence of the changes imparted to the HDPE matrix by the introduction of very small amounts of substantially uniformly dispersed Vectra™ A950 LCP.

The steps used to prepare the polymer composites of the first dilution were then repeated to prepare the polymer composites of the second solution except that the polymer composites of the first dilution were used as a masterbatch for the preparation of the composites of the second dilution.

Example 3: Mechanical Properties of HDPE/Vectra™ A950 LCP Blends

The sheets used in these tests were first dilution blends prepared as in Example 2 above except that the Brabender twin screw extruder was equipped with a slit die rather than a strand die. The sheets were inspected visually, both with the unaided eye and by optical microscopy (between 40 and 250 power, depending upon the concentration of the LCP in the HDPE matrix) for LCP dispersion within the HDPE matrix. In all cases, the dispersion was substantially uniform as characterized by the substantial absence of visually (up to 250 power) detectable LCP domains (i.e. clusters of LCP within the HDPE matrix).

The sheets were then subjected to the Standard Test Methods for Tensile Properties of Thin Plastic Sheeting (ASTM D-882 - 83). The results of these tests are reported in Table 2.

TABLE 2

Tensile Test

| Polymer System | Peak Load lb | U.T. Strength psi | Yield Strength psi | Yield Elongation % | Break Elongation % | Modulus psi | Energy ft-lb |
|---|---|---|---|---|---|---|---|
| HDPE | 36.41 | 3440.9 | 3440.9 | 10.97 | 576.81 | $125.503 \cdot 10^3$ | 29.537 |
| HDPE/ Vectra™ 99/1 | 35.17 | 3518.9 | 3518.9 | 11.19 | 3 specimens out of 6 tested did not fail at elongation of 995%, 1186.5% and 1237.1% | $119.98 \cdot 10^3$ | 44.2 |
| HDPE/ Vectra™ 98/2 | 30.73 | 3701.3 | 3701.3 | 10.71 | 4 specimens out of 6 tested did not fail at elongation of 1002.8%, 1036.6%, 1235.2% and 1238.2 % | $124.58 \cdot 10^3$ | 43.1 |

As the data in Table 2 demonstrate, the addition of relatively small amounts of Vectra™ A950 LCP to an HDPE matrix has a minimum effect on such mechanical properties as peak load and modulus, and has a small positive effect on such properties as tensile strength, yield strength and yield elongation. However the positive effect on break elongation is near spectacular. Not only is break elongation increased by over 100%, but it is accomplished by the addition of relatively small amounts of a material (Vectra™ A950 LCP) that is immiscible with the base polymer (HDPE). This is evidence of the substantial influence that the Vectra™ A950 LCP has on the crystallinity of the HDPE at relatively low concentrations.

The unusually good performance of HDPE/Vectra™ A950 blends in respect to their elongation at break behavior suggests that these type of blends can be of high interest in producing polymers with high modulus. Conventional polymers have moduli about two orders of magnitude lower than theoretical values. For a linear straight-chain hydrocarbon polymer such as HOPE, the theoretical modulus is 240 GPA.

A very limited number of processing approaches are available for the preparation of HDPE with both a high degree of orientation and modulus. The most important approach is the gel spinning technique developed to produce ultra-high modulus polyethylene. It involves the longitudinal growth of fibrillar polyethylene crystals ($M_w$ = 1.5 x $10^6$) from xylene solution leading to macrofibres with the remarkably high modulus of 100 GPA. The results of this invention, regarding the break elongation behavior of the HDPE/Vectra™ A950 blends, indicate that the extrusion of these blends at a high draw ratio can lead to much higher moduli fibers than similarly prepared HDPE controls. This in turn suggests that this invention can be used to obtain high and ultra high modulus fibers from melt-spinning, thus eliminating processing fibers from solvents.

The improved extrudability and orientability over the conventional procedures is based on the reduction in molecular network entanglement, which is at least partially a result of the presence of rigid-rod molecules and the presence of a new phase which is described in more detail later.

Films similar to those tested for tensile strength were also tested for impact properties following the procedure of ASTM D-3763-86. The results are reported in Table 3.

TABLE 3

Impact Test

| Sample No. | Sample Composition | Thickness (in. x $10^3$) | Energy (ft lbs) | Impact (ft lb/in.$^2$) |
|---|---|---|---|---|
| 1 | | 8.0 | 0.04 | 10.0 |
| 2 | | 7.5 | 0.03 | 8.0 |
| 3 | | - | - | - |
| 4 | | 8.0 | 0.05 | 12.5 |
| 5 | HDPE | 8.0 | 0.04 | 10.0 |
| 6 | | 8.0 | 0.07 | 17.5 |
| 7 | | 8.0 | 0.06 | 15.0 |
| 8 | | 8.0 | 0.06 | 15.0 |
| 9 | | 8.0 | 0.07 | 17.5 |
| 10 | | 8.5 | 0.03 | 7.1 |
| Average | | | | 12.5 |
| 1 | | 8.0 | 0.08 | 20.0 |
| 2 | | 7.5 | 0.05 | 13.3 |
| 3 | | 7.0 | 0.03 | 8.6 |
| 4 | 99.5/0.5 | 8.5 | 0.07 | 16.5 |
| 5 | HDPE/Vectra™ A950 | 9.0 | 0.07 | 15.6 |
| 6 | | 8.5 | 0.04 | 9.4 |
| 7 | | 8.0 | 0.04 | 10.0 |
| 8 | | 8.0 | 0.07 | 17.5 |
| 9 | | 7.5 | 0.03 | 8.0 |
| 10 | | 7.0 | 0.05 | 14.3 |
| Average | | | | 13.3 |
| 1 | | 8.0 | 0.03 | 7.5 |
| 2 | | 10.0 | 0.15 | 30.0 |
| 3 | | 10.0 | 0.09 | 18.0 |
| 4 | 99/1 | 9.0 | 0.06 | 13.3 |
| 5 | HDPE/Vectra™ A950 | 8.0 | - | - |
| 6 | | 9.0 | 0.05 | 11.1 |
| 7 | | 9.0 | 0.06 | 13.3 |
| 8 | | 9.0 | 0.07 | 15.6 |
| 9 | | 8.0 | 0.03 | 7.5 |
| 10 | | 8.0 | 0.05 | 12.5 |
| Average | | | | 14.3 |

As demonstrated here, the addition of a relatively small amount of Vectra™ A950 LCP to an HDPE matrix actually results in an enhancement of the HDPE impact properties.

Example 4: HDPE/Vectra™ A950 LCP Film Orientation

a) Uniaxial Orientation

HDPE and 99/1 HDPE/Vectra™ A950 LCP polymer composite sheets prepared as described in Example 3 above were oriented in a Sintech oven at 100°C by pulling a sheet of about 0.02″ thickness and 1″ in length at a speed of about 20″ per min until the sheet is 10″ in length.

b) Biaxial Orientation

Several compositions of polyolefin/Vectra™ A950 blends and their controls were biaxially drawn on a Iwamoto two-way stretch machine that allows simultaneous drawing along two perpendicular directions in a hot air oven. Extruded sheets used for biaxial orientation were first dilution blends prepared as in Example 2 except that the Brabender twin screw extruder was equipped with a slit die rather than a strand die. The sheets were cut to 10 x 10 cm squares and placed in the preheated biaxial stretcher and clamped around the edges with pneumatic clamps. Biaxially oriented films were obtained using processing conditions shown in Table 4. The samples were produced by simultaneously drawing to draw ratios indicated in Table 4 along two perpendicular directions in the plane of the sheet.

TABLE 4

Biaxial Stretching Film Processing Conditions

| Sample | Testing Temperature (°C) | Stretching Speed (mm/s) | Preheating Time (min) | Elongation Ratio |
|---|---|---|---|---|
| HDPE | 129 | 35 | 30 | 4.5 x 4.5 |
| HDPE/Vectra™ A950 99.5/0.5 | 127 | 35 | 30 | 4.5 x 4.5 |
| HDPE Vectra™ A950 98/2 | 127 | 35 | 30 | 4.5 x 4.5 |
| LLDPE | 120 | 35 | 30 | 4 x 4 |
| LLDPE/Vectra™ A950 99/1 | 120 | 35 | 30 | 4 x 4 |
| PP | 154 | 35 | 30 | 3 x 3 |
| PP/Vectra™ A950 99/1 | 154 | 35 | 30 | 3 x 3 |

Example 5: Chemical Resistance

a) Uniaxially Oriented Films

The oriented films prepared in Example 4 were tested for their chemical resistance properties by mounting thin films (0.001-0.008″ thickness) onto glass vapor transmission jars. Following ASTM method D-814 - 86, the jars were one-half pint ($236cm^3$) Mason jars equipped with a Kerr-type screw cap and an added smooth edged, flat-metal ring. The screw cap and ring held the specimen against the edge of the jar. The circular area of each specimen exposed for testing was 2.188″ (55.6mm) in diameter. Approximately 200 ml of xylene were poured into each jar and the thickness of the specimen measured to the nearest 0.001″ by an electronic digital caliper.

The initial weights of the jars filled with solvent and fitted with the test films were recorded to the nearest 0.005g.

The tightly sealed jars were then placed in a well ventilated, temperature controlled oven. The jars were kept in an upright position with no direct contact between the hot solvent and the test specimens. The test was conducted at 50°C, and the weight loss recorded every 24 hours for 15 days. Two samples of the same composition were prepared for every specimen, and permeability was taken as the average of the values obtained from the two test jars. Permeability, as a property of a material, is a product of permeance and thickness. Permeance rates are estimated by assuming that the rate is inversely proportional to thickness. Reported in Table 5 are the averaged, day-by-day results of 100% HDPE and 91/1 HDPE/Vectra™ LCP oriented films, and this data is graphically depicted in Figure 3.

TABLE 5

Chemical Resistance Test

| DAY | HDPE | HDPE/VECTRA™ 99/1 |
|---|---|---|
| 1 | 0.855 | 0.36 |
| 2 | 1.635 | 0.76 |
| 3 | | |
| 4 | | |
| 5 | 3.735 | 1.88 |
| 6 | 4.620 | 2.37 |
| 7 | 5.340 | 2.91 |
| 8 | 6.255 | 3.35 |
| 9 | 7.020 | 3.88 |
| 10 | | |
| 11 | | |
| 12 | 9.255 | 5.07 |
| 13 | 9.900 | 5.43 |
| 14 | 10.740 | 5.77 |
| 15 | 11.460 | 6.15 |

As apparent from the above data and Figure 3, the addition of just 1% Vectra™ A950 LCP to HDPE, dispersed substantially uniformly throughout the HDPE matrix, dramatically improves (by almost 50%) the chemical resistance of the HDPE.

b) Biaxially Oriented Films

The biaxially oriented films were tested for chemical resistance improvement using the same procedure that was used for the uniaxially oriented films. The tests were performed at room temperature using xylene as a solvent. The chemical resistance performance of biaxially oriented films can be observed in Figures 4 - 7 where several polyolefin/Vectra™ A950 blends are compared with their controls. After 45 days of testing, the chemical resistance improvement is about 31% for 99.5/0.5 HDPE/Vectra™ A950, 72% for 98/2 HDPE/Vectra™ A950, 14% for 99/1 PP/Vectra™ A950, and 19% for 99/1 LDPE/Vectra™ A950 blends.

Example 6: Crystallinity and Crystallite Size

Figure 8 reports the impact of the addition of various weight percentages of Vectra™ A950 LCP on the crystallinity of unoriented HDPE. The degree of crystallinity was measured through standard differential scanning calorimetry techniques using a Perkin-Elmer DSC-4 equipped with a TADS data station. The sample sizes

ranged from 7 to 15 mg and the scans were done at a heating rate of 20°C per min. As the data in Figure 8 show, the addition of relatively small amounts of Vectra™ A950 LCP to HDPE increases the crystallinity of the HDPE, and this in turn results in enhanced mechanical properties as evidenced by the data in Table 2. The data in Figure 8 show that this increase in crystallinity also holds true even after orientation of the HDPE/Vectra™ A950 LCP film.

The crystallite size was measured by using the Rietfeld refinement analysis Wiles & Young (1981) J.Appl-.Cryst. 14, 149, and Howard & Hill (1986) AAEC Report No. M112. The results of this analysis are reported in Table 6:

TABLE 6

Crystallite Size of a Uniaxially-Oriented and Unoriented HDPE and 99/1 HDPE/Vectra™ A950 LCP Blends

| Sample No. | Sample Description | Unit Cell (A) | Crystallite Size (A) | Orientation on (200) |
|---|---|---|---|---|
| 1 | HDPE Unoriented | a:7.425(32)<br>b:4.939(24)<br>c:2.530 | 250 | 0.87 |
| 2 | HDPE Oriented | a:7.474(24)<br>b:4.947(20)<br>c:2.530 | 150 | 0.80 |
| 3 | 99/1 HDPE + Vectra™ LCP Unoriented | a:7.489(40)<br>b:4.962(30)<br>c:2.530 | 150 | 0.72 |
| 4 | 99/1 HDPE + Vectra™ LCP Oriented | a:7.440(25)<br>b:4.949(20)<br>c:2.530 | 180 | 0.65 |

As the data in this table demonstrates, the crystallite size of unoriented HDPE is substantially reduced with the addition of 1 wt % Vectra™ A950 LCP. The lowest degree of orientation on 200 plane is achieved when the number shown in the last column of Table 6 above is closer to one (i.e. 0.87). Higher orientation is reflected in lower values (i.e. 0.65). The orientation on 200 plane of both the HDPE unoriented and oriented is enhanced with the addition of 1% Vectra™ A950 LCP. This in turn yields improved mechanical properties as demonstrated by the data in Table 2.

Example 7: Dynamic Mechanical Analysis of HDPE/Vectra™ A950 Blends

The dynamic mechanical behavior of several compositions of HDPE/Vectra™ A950 blends was tested on a DuPont 982 apparatus.

Figures 9 - 13 represent the DM Analysis modulus and damping (internal friction) as a function of frequency for HDPE control and 97/3, 98/2, 99/1, 99/5/0.5 HDPE/Vectra™ A950 blends. Figure 9 shows that the HDPE control displays two damping peaks associated with gamma relaxation occurring in the amorphous phase and alpha relaxation of the crystalline phase. Figures 10 - 13 show that in the HDPE/Vectra™ A950 samples very well defined changes occur in the alpha-peak region. These changes consist of a slight shift of the alpha-dispersion peak and the appearance of a beta-transition region. The significance of changes in the alpha-peak

region is that they reflect changes in crystallinity, molecular motion and molecular orientation. The creation of a beta-phase may explain the increased flexibility which was translated in a substantial improvement in elongation at break properties of HDPE/Vectra™ A950 blends. Controlling these parameters in materials such as HDPE is important, especially for environmental and industrial applications.

Example 8: LDPE/Vectra™ A950 LCP Blend

The procedures of Examples 1 and 2 were repeated except that low density polyethylene (LDPE) (BP NOVEX™ material with a melting temperature of 103.3°C) was substituted for HDPE, the masterbatch weight ratio was 95/5 of LDPE to Vectra™ A950 LCP, the weight ratio after the first dilution was 99.9/0.1, and the Brabender Model 81430 twin screw extruder was operated at a temperature of 280°C and the twin mixing screws rotated at 30 rpm. Some of the masterbatch was extruded through a slit die to form a sheet which was then visually inspected, both with the unaided eye and by optical microscopy for LCP dispersion within the LDPE matrix. Figures 14 and 15 are micrographs of two of these sheets at 100x magnification, Figure 14 cross/polarized and Figure 15 unpolarized. As is evident from these micrographs, the dispersion of LCP within the HDPE matrix was substantially uniform as characterized by the substantial absence of visually detectable LCP domains, i.e. clusters. When subjected to the tensile, impact and chemical resistance tests of Examples 3 and 5, both oriented and unoriented 99.9/0.1 LDPE/Vectra™ A950 LCP sheets showed an improvement over unmodified LDPE sheets, both oriented and unoriented.

Example 9: LLDPE/Vectra™ A950 LCP Blend

The procedure of Examples 1 and 2 was repeated except that linear low density polyethylene (LLDPE) (Dow 2045), a melting temperature of 124.7°C and a density of 0.92 g/cm$^3$) was substituted for HDPE, and the Model 81430 Brabender twin screw extruder was maintained at 260°C and the twin high shear mixing screws were rotated at 30 rpm. The torque required to extrude LLDPE neat was measured, and then the torque for extruding various first dilution blends of LLDPE and Vectra™ A950 LCP was measured. The results are graphically depicted in Figure 16 and consistent with the data reported in Figures 1 and 2 for HDPE and Vectra™ A950 LCP blends; substantially less torque was required to extrude blends than the neat LLDPE.

Example 10: PP/Vectra™ A950 LCP Blend

The procedures of Examples 1 and 2 were repeated except that polypropylene (PP) (Shell 5C08, with a density of 0.903 g/cm$^3$) was substituted for HDPE, the PP/Vectra™ A950 LCP weight ratio after the first dilution was 99/1 and after the second dilution 99.95/0.05, and the Brabender twin screw extruder was maintained at 260-270°C and the mixing screws were rotated at 30 rpm. The Vectra™ A950 LCP was found to be substantially uniformly dispersed throughout the PP matrix as characterized by the substantial absence of detectable (to the unaided eye) LCP domains on the surface of the pellets. In addition, the PP matrix shows little or no visible evidence of degradation.

Example 11: Barex™ 210/Rodrun™ LC 3000 Blends

The procedures of Examples 1 and 2 were repeated except that Barex™ 210 (a nitrile resin manufactured by BP Chemicals Inc. with a weight average molecular weight of about 50,000 and a glass transition temperature of about 86.0°C) was substituted for HDPE and Rodrun™ (a polymer based on p-hydroxybenzoic acid and polyethylene terephthalate, manufactured and sold by Unitika) was substituted for Vectra™ A950. The Brabender twin screw extruder was maintained at a temperature of about 210°C and its mixing screws were rotated at 30 rpm. A first dilution blend of a 98/2 weight ratio of Barex™/Rodrun™ was extruded as a film, oriented as in Example 4(a), and then tested for chemical resistance to methanol at 23°C by repeating the procedure of Example 5. The data is reported graphically in Figure 17, and it clearly demonstrates that the chemical resistance properties of Barex™ 210 can be meaningfully enhanced by the addition of a relatively small amount of Rodrun™ LCP.

Example 12: Polystyrene/Vectra™ A950 LCP Blends

The procedures of Examples 1 and 2 were repeated except that polystyrene (PS) (glass transition temperature of about 104°C and manufactured and sold by Polysar) was substituted for the HDPE, the Brabender twin screw extruder was maintained at 260°C, and the twin mixing screws of the extruder were rotated at 30

rpm. The torque required to extrude PS neat and PS blended with relatively small amounts of Vectra™ A950 LCP was measured during the first dilution step and the results are reported graphically in Figure 18. Not only is the reduction in torque marked even with as little as 1% added Vectra™ A950 LCP, but the flexibility imparted to the otherwise relatively brittle PS is sufficient to allow the PS/Vectra™ A950 LCP 99/1 blend to be collected from the extruder on a take-up roll. This result demonstrates the pronounced effect the addition of small amounts of Vectra™ A950 LCP to PS has on the nature of the PS.

Although the invention has been described in considerable detail through the preceding Examples, these Examples are for purposes of illustration only. Many variations and modifications can be made by one skilled in the art without departing from the spirit and scope of the invention.

## Claims

1. A polymer composite comprising a matrix of at least one thermoplastic polymer in which at least on liquid crystal polymer is substantially uniformly dispersed at a concentration of less than about 2 wt.% based on the weight of the polymer composite.

2. The polymer composite of claim 1 in which the thermoplastic polymer matrix is at least one of a polyolefin, polyvinyl halide, nylon, polyester, polystyrene, acrylic resin and methacrylic resin, high nitrile resin, and blends thereof.

3. The polymer composite of claim 1 in which the polyolefin is at least one of high density polyethylene, low density polyethylene, linear low density polyethylene, very low density polyethylene, polypropylene, and an ethylene-propylene copolymer, poly(4-methyl-1-pentene), or blends thereof.

4. The polymer composite of claim 1 in which the liquid crystal polymer is a thermotropic aromatic polyester.

5. The polymer composite of claim 4 in which the liquid crystal polymer is at least one of the Vectra' family, the Ekonol' family, Xydar' family, and the Rodrun' family.

6. A process for preparing a polymer composite comprising a matrix of at least one thermoplastic polymer in which at least one liquid crystal polymer is substantially uniformly dispersed at a concentration of less than about 2 wt.% based on the weight of the polymer composite, the process comprising:
   A. Blending at least one thermoplastic polymer with a sufficient amount of at least one liquid crystal polymer such that the resulting blend contains at least about 2 wt.% of the liquid crystal polymer, the blending of thermoplastic polymer and liquid crystal polymer occurring at a temperature at which the thermoplastic polymer is molten and the liquid crystal polymer is solid such that the liquid crystal polymer is substantially uniformly dispersed throughout the thermoplastic polymer; and
   B. Diluting the concentration of the liquid crystal polymer in the blend of (A) to less than about 2 wt.% by adding more thermoplastic polymer to the blend of (A) at a temperature at which the thermoplastic polymer is molten and the liquid crystal polymer is solid such that the liquid crystal polymer is substantially uniformly dispersed throughout the thermoplastic polymer.

7. The process of claim 6 in which the temperature at which the thermoplastic polymer and liquid crystal polymer are blended in such that less torque is required to extrude the blend than is required to extrude the thermoplastic polymer alone.

8. The process of claim 7 in which the thermoplastic polymer is a polyolefin.

9. The process of claim 7 in which the thermoplastic polymer is at least one of a high density polyethylene, low density polyethylene, linear low density polyethylene, very low density polyethylene, polypropylene, and an ethylene-propylene copolymer.

10. The process of claim 9 in which the liquid crystal polymer is a thermotropic aromatic polyester.

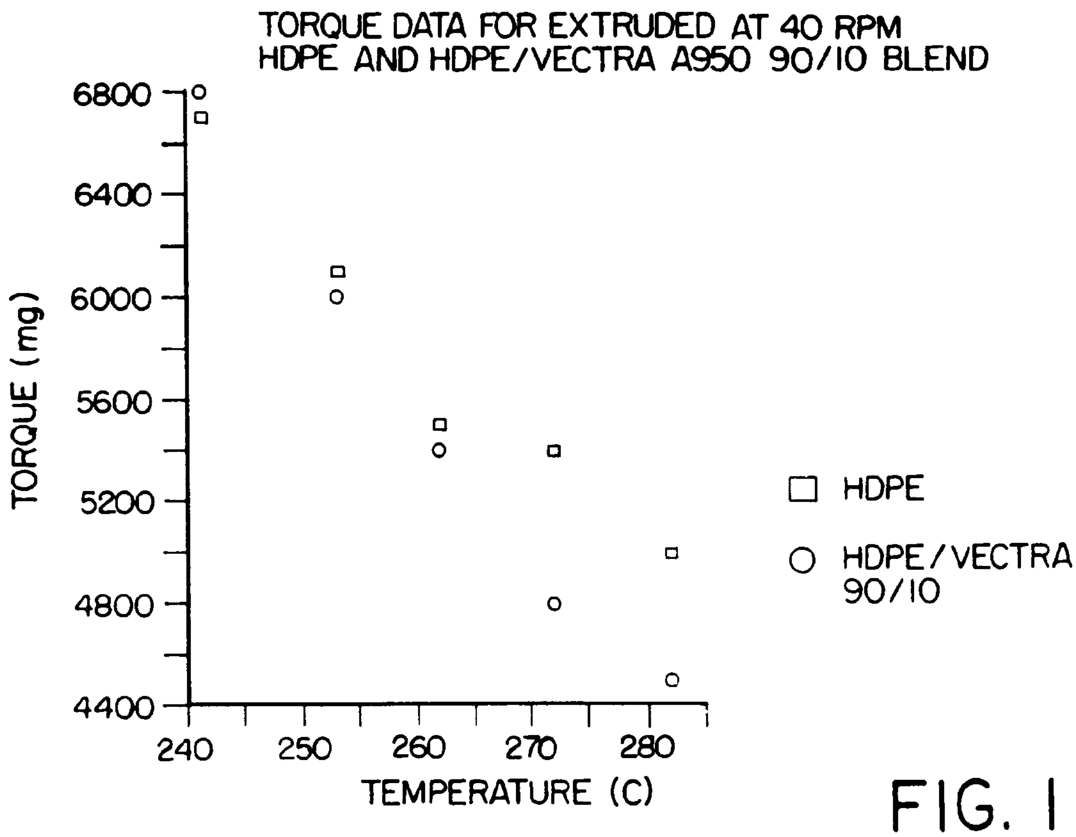
TORQUE DATA FOR EXTRUDED AT 40 RPM
HDPE AND HDPE/VECTRA A950 90/10 BLEND
6800
6400
6000
5600
5200
4800
4400
TORQUE (mg)
240
250
260
270
280
TEMPERATURE (C)
HDPE
HDPE/VECTRA 90/10

FIG. 1

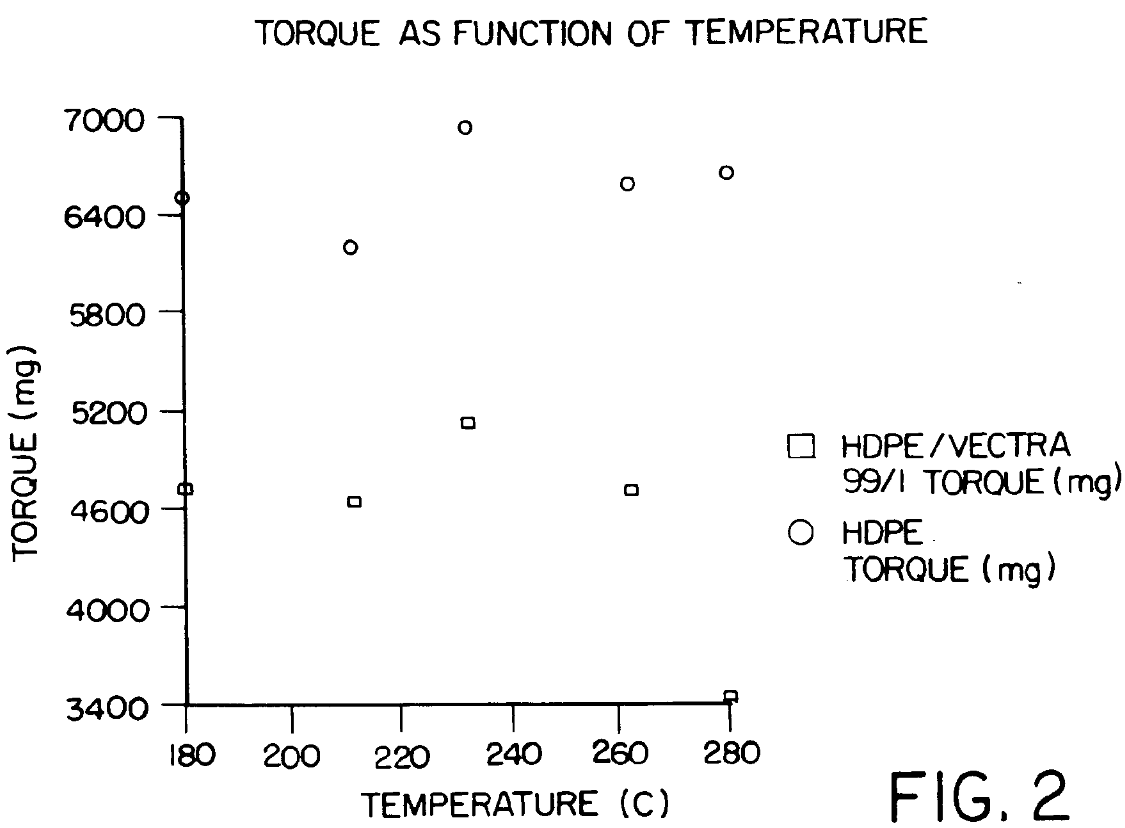
TORQUE AS FUNCTION OF TEMPERATURE
7000
6400
5800
5200
4600
4000
3400
TORQUE (mg)
180
200
220
240
260
280
TEMPERATURE (C)
HDPE/VECTRA 99/1 TORQUE (mg)
HDPE TORQUE (mg)

FIG. 2

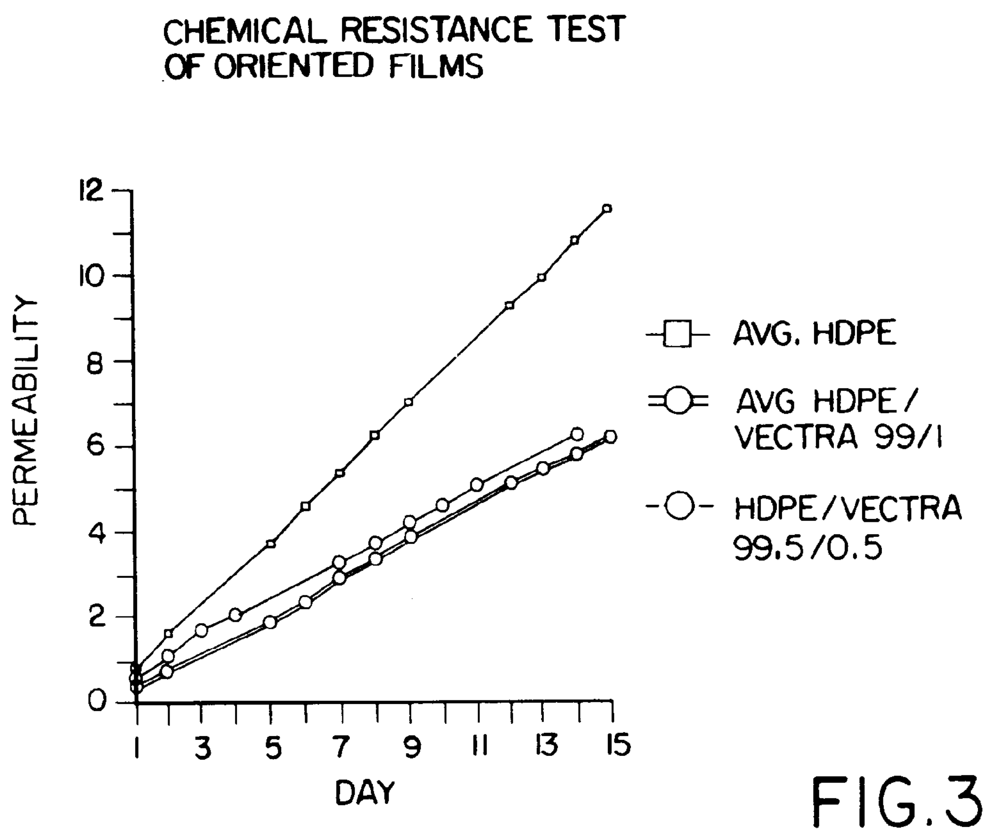
CHEMICAL RESISTANCE TEST
OF ORIENTED FILMS
PERMEABILITY
0
2
4
6
8
10
12
1
3
5
7
9
11
13
15
DAY
AVG. HDPE
AVG HDPE/
VECTRA 99/1
HDPE/VECTRA
99.5/0.5

FIG.3

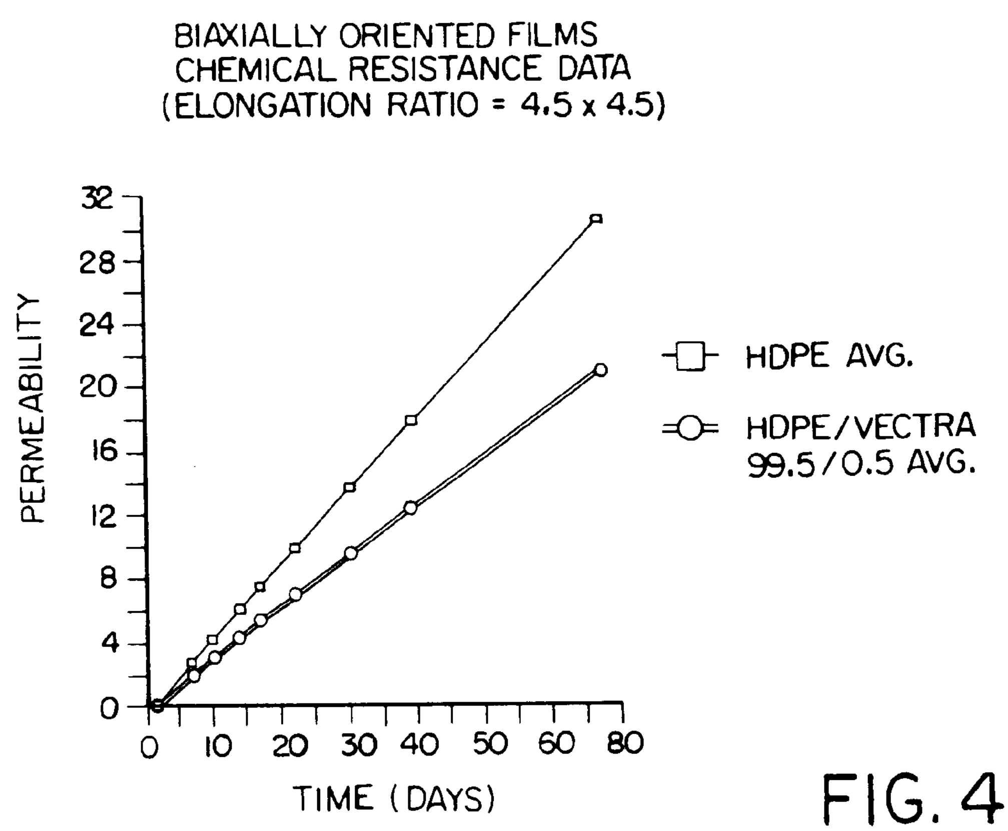
BIAXIALLY ORIENTED FILMS
CHEMICAL RESISTANCE DATA
(ELONGATION RATIO = 4.5 x 4.5)
PERMEABILITY
0
4
8
12
16
20
24
28
32
0
10
20
30
40
50
60
80
TIME (DAYS)
HDPE AVG.
HDPE/VECTRA
99.5/0.5 AVG.

FIG. 4

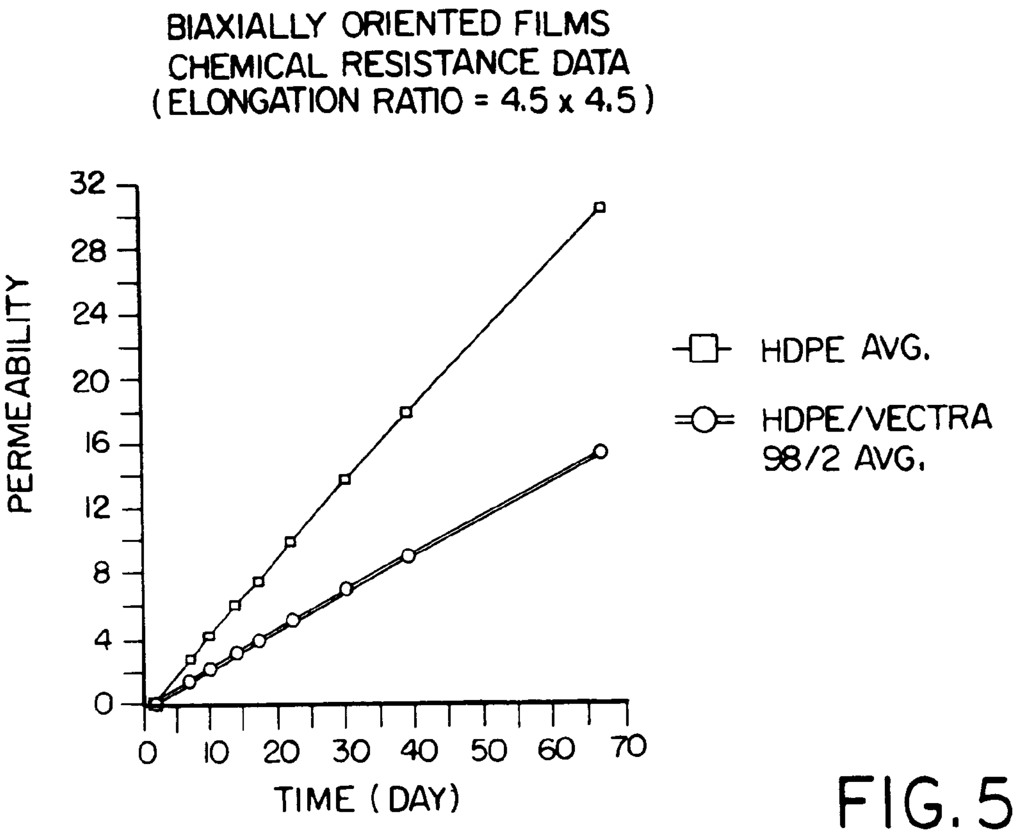
BIAXIALLY ORIENTED FILMS
CHEMICAL RESISTANCE DATA
(ELONGATION RATIO = 4.5 x 4.5)
PERMEABILITY
32
28
24
20
16
12
8
4
0
0
10
20
30
40
50
60
70
TIME (DAY)
HDPE AVG.
HDPE/VECTRA 98/2 AVG.

FIG. 5

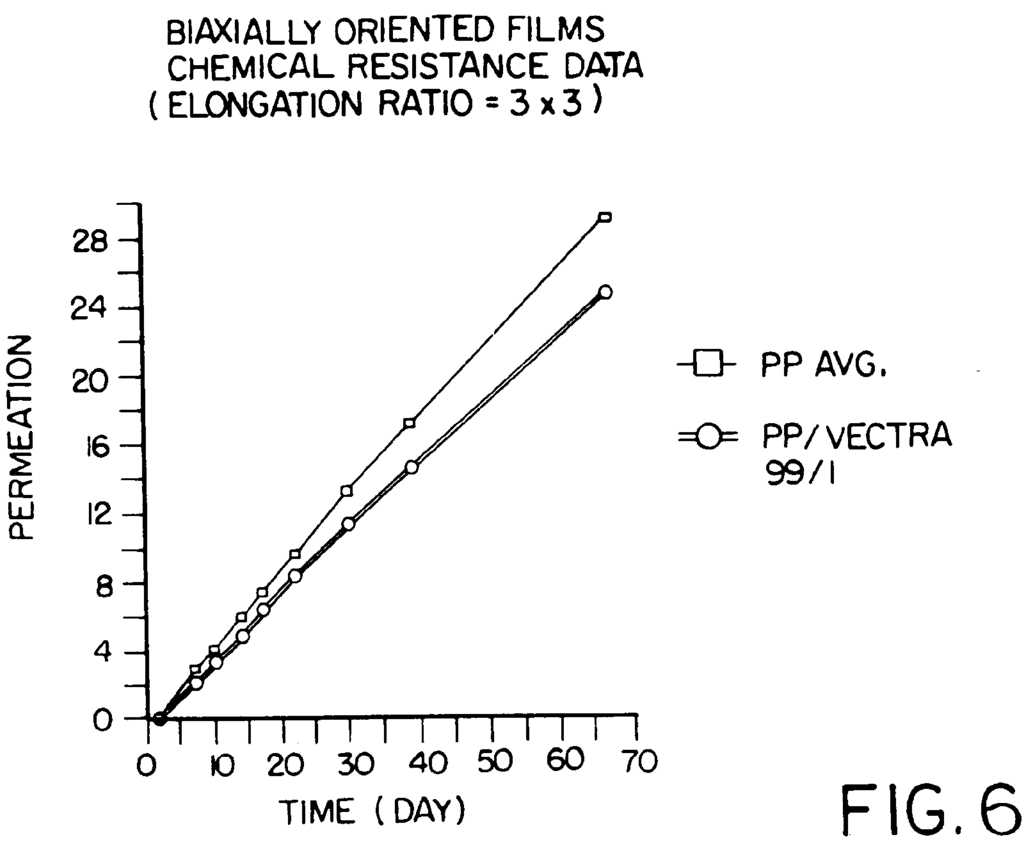
BIAXIALLY ORIENTED FILMS
CHEMICAL RESISTANCE DATA
(ELONGATION RATIO = 3 x 3)
PERMEATION
28
24
20
16
12
8
4
0
0
10
20
30
40
50
60
70
TIME (DAY)
PP AVG.
PP/VECTRA 99/1

FIG. 6

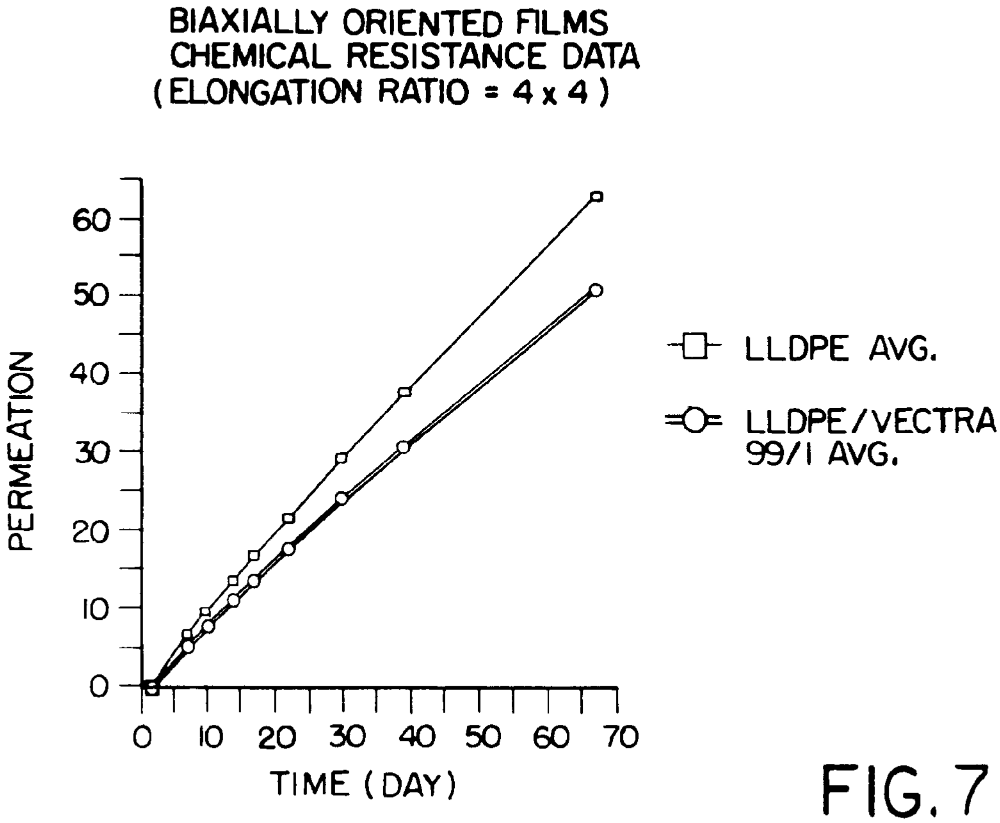
BIAXIALLY ORIENTED FILMS
CHEMICAL RESISTANCE DATA
(ELONGATION RATIO = 4 x 4)
PERMEATION
0
10
20
30
40
50
60
0
10
20
30
40
50
60
70
TIME (DAY)
LLDPE AVG.
LLDPE/VECTRA 99/1 AVG.

FIG. 7

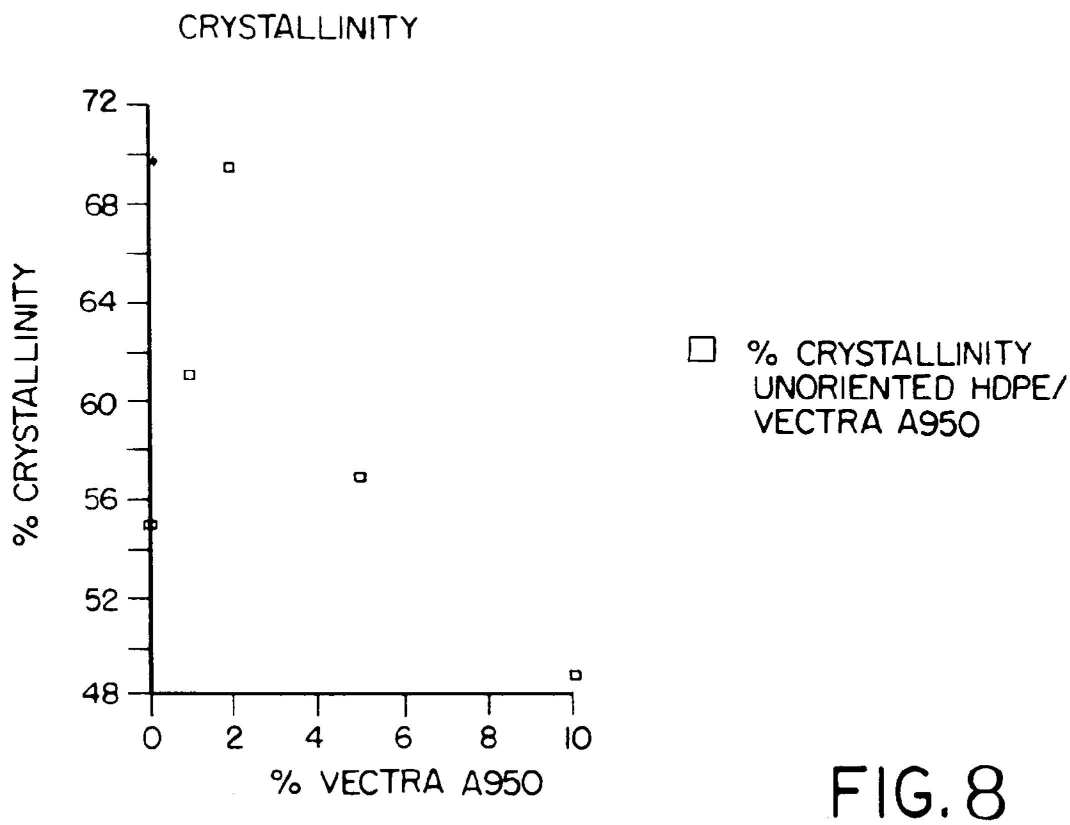
CRYSTALLINITY
% CRYSTALLINITY
72
68
64
60
56
52
48
0
2
4
6
8
10
% VECTRA A950
% CRYSTALLINITY UNORIENTED HDPE/ VECTRA A950

FIG. 8

DMA
HDPE

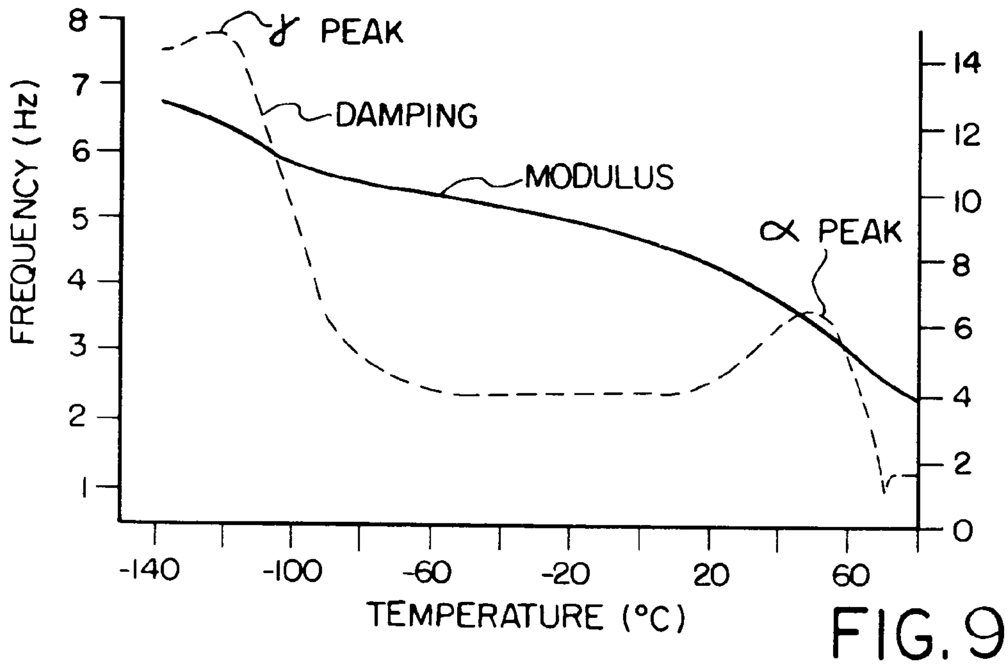


FIG. 9

DMA
HDPE/VECTRA A950
99.5/0.5 BLEND

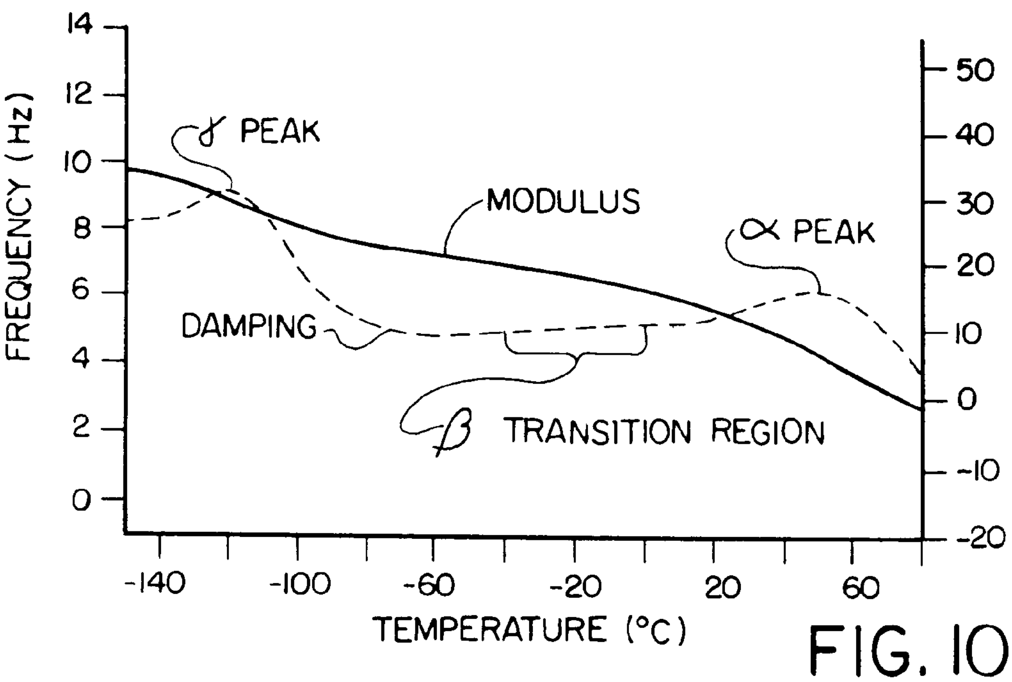


FIG. 10

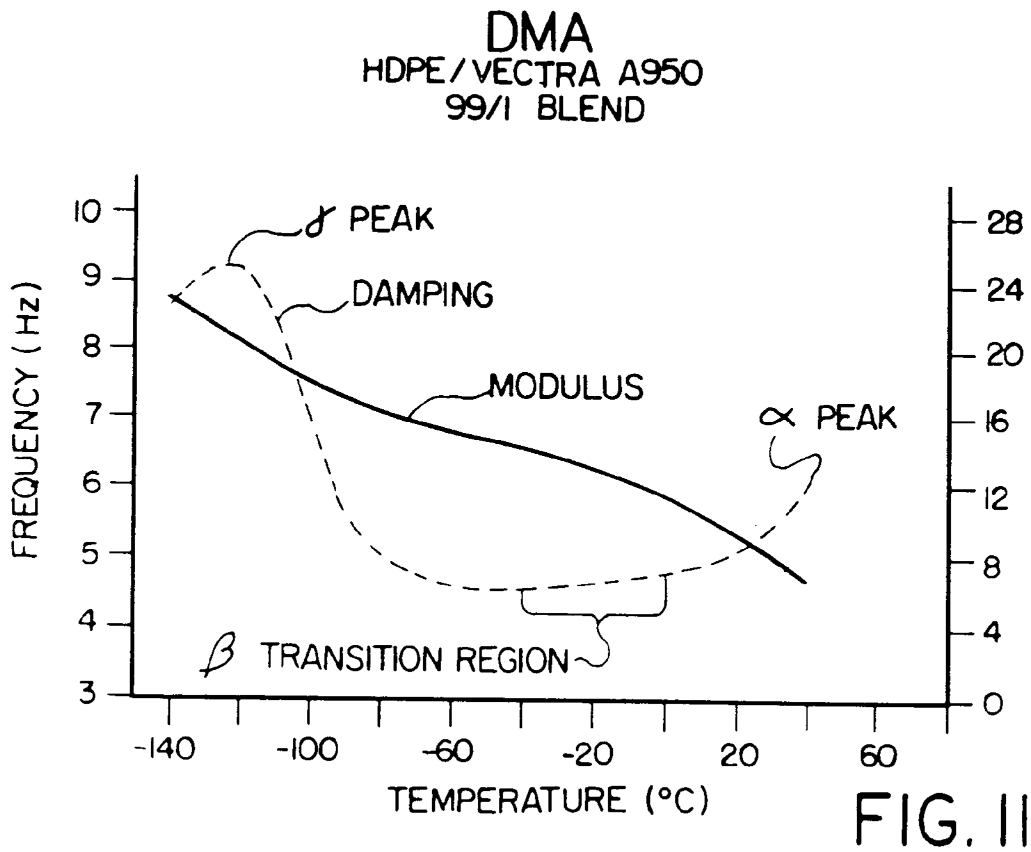
DMA
HDPE/VECTRA A950
99/1 BLEND
γ PEAK
DAMPING
MODULUS
α PEAK
β TRANSITION REGION
FREQUENCY (Hz)
TEMPERATURE (°C)
10
9
8
7
6
5
4
3
28
24
20
16
12
8
4
0
-140
-100
-60
-20
20
60

FIG. 11

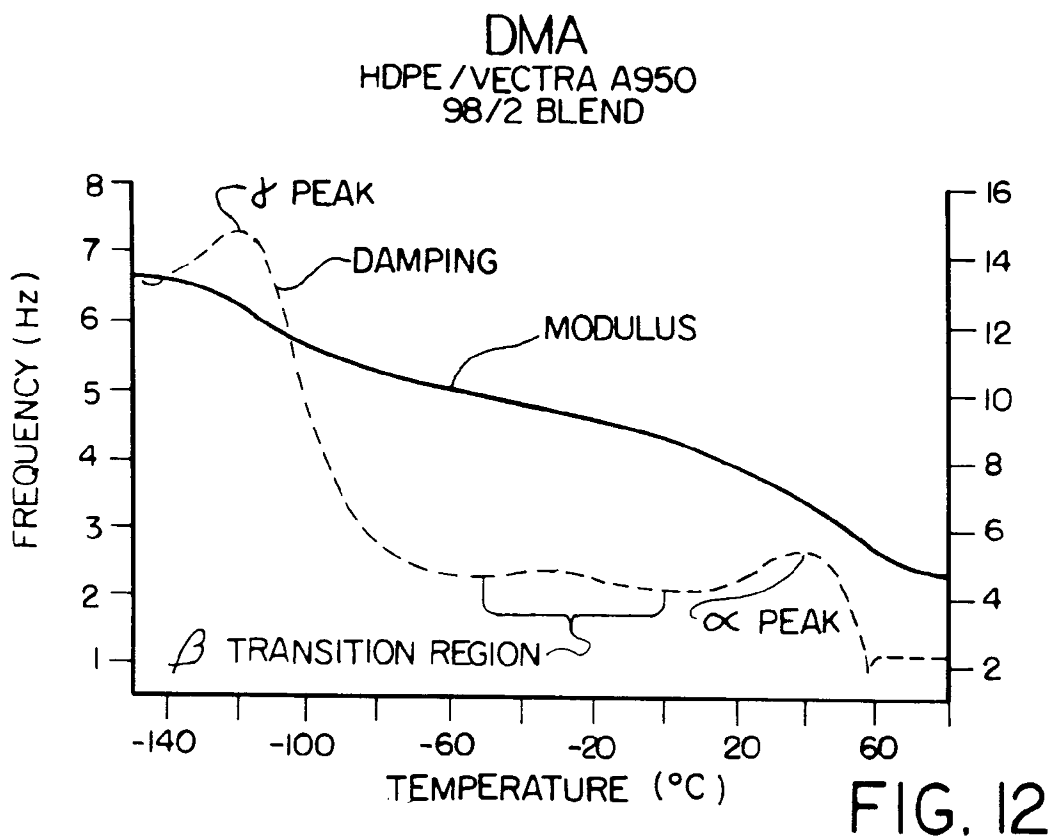
DMA
HDPE/VECTRA A950
98/2 BLEND
γ PEAK
DAMPING
MODULUS
α PEAK
β TRANSITION REGION
FREQUENCY (Hz)
TEMPERATURE (°C)
8
7
6
5
4
3
2
1
16
14
12
10
8
6
4
2
-140
-100
-60
-20
20
60

FIG. 12

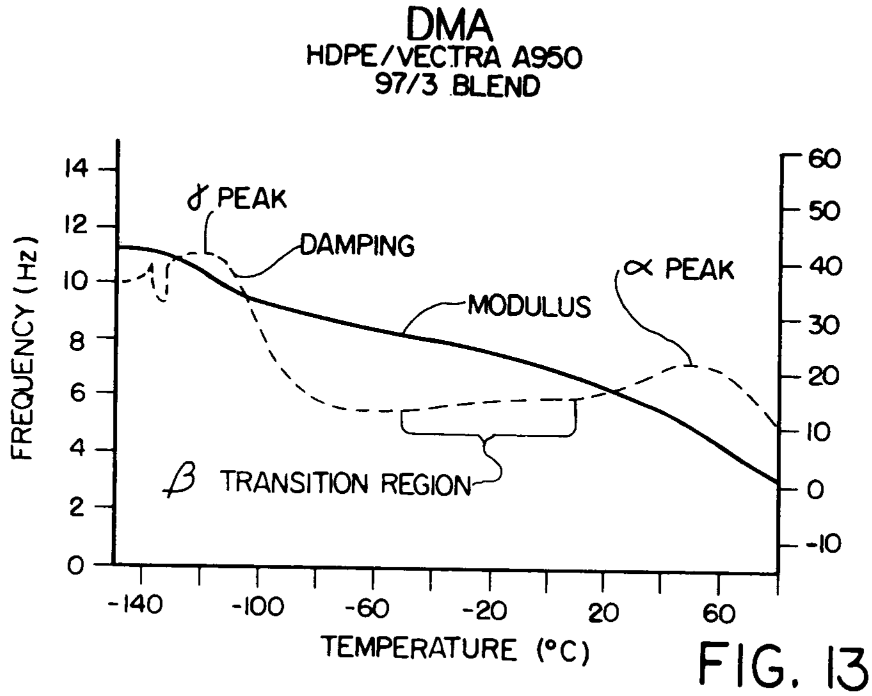


FIG. 13

CROSS POLARIZED
LDPE/V 95/5

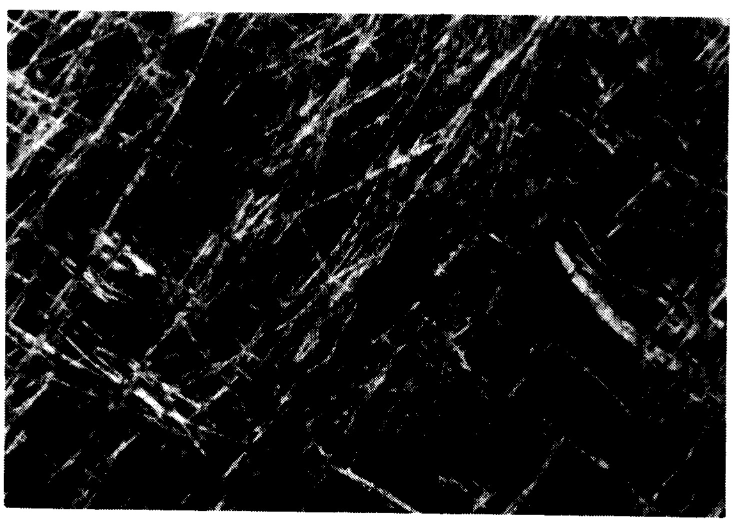

FIG. 14

UNPOLARIZED
LDPE/V 95/5

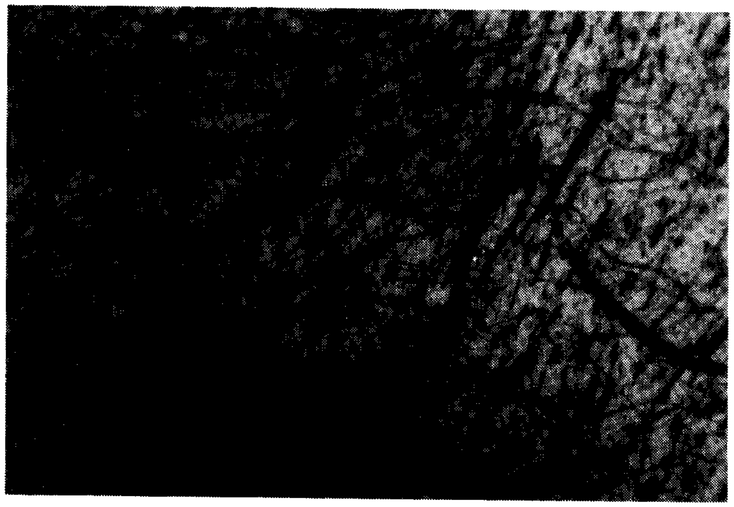

FIG. 15

EXTRUSION OF LLDPE/VECTRA BLENDS
T = 260 C

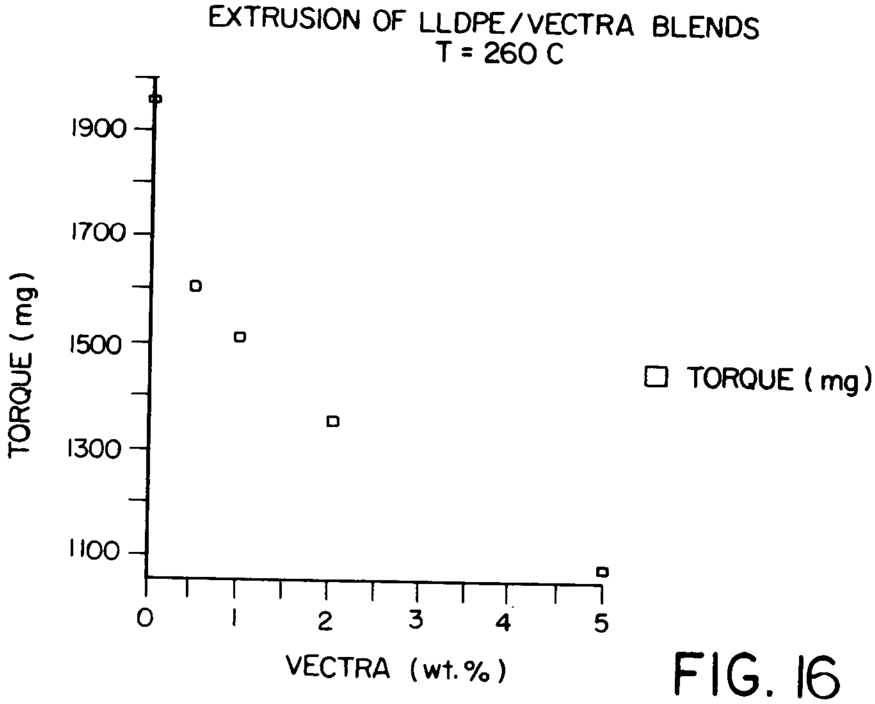


FIG. 16

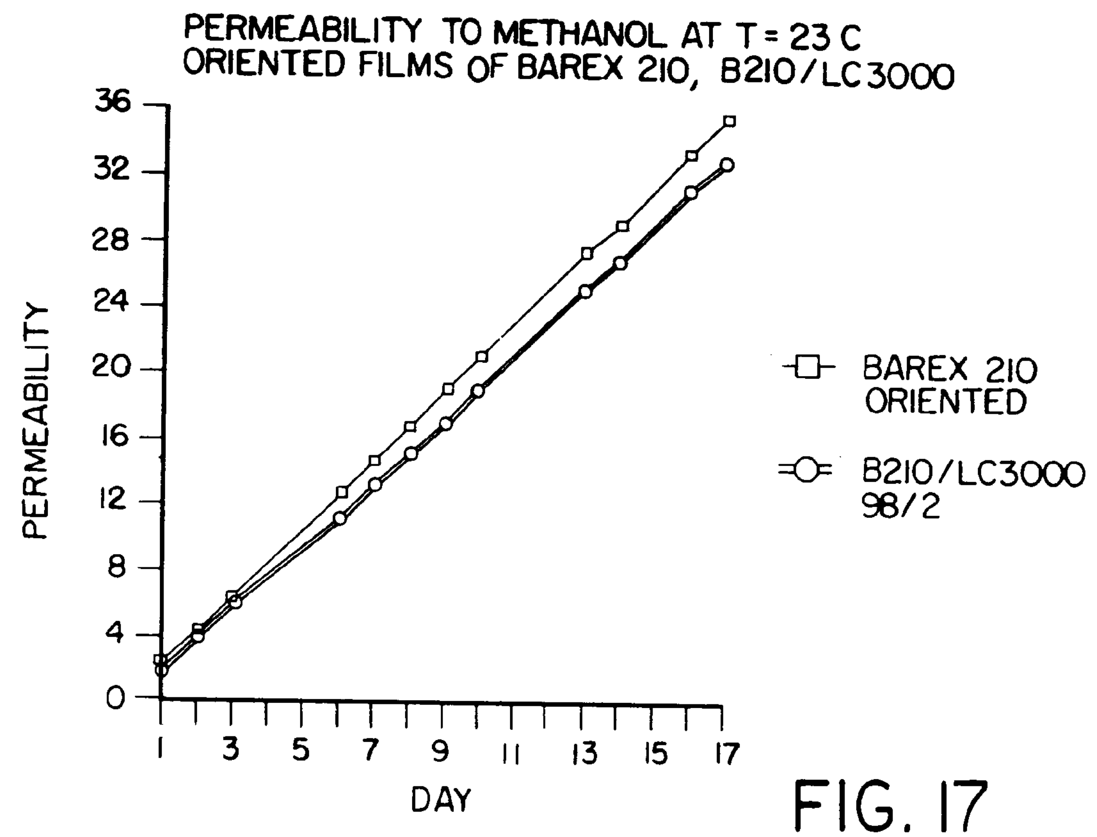
PERMEABILITY TO METHANOL AT T = 23 C
ORIENTED FILMS OF BAREX 210, B210/LC3000
PERMEABILITY
36
32
28
24
20
16
12
8
4
0
1
3
5
7
9
11
13
15
17
DAY
BAREX 210 ORIENTED
B210/LC3000 98/2

FIG. 17

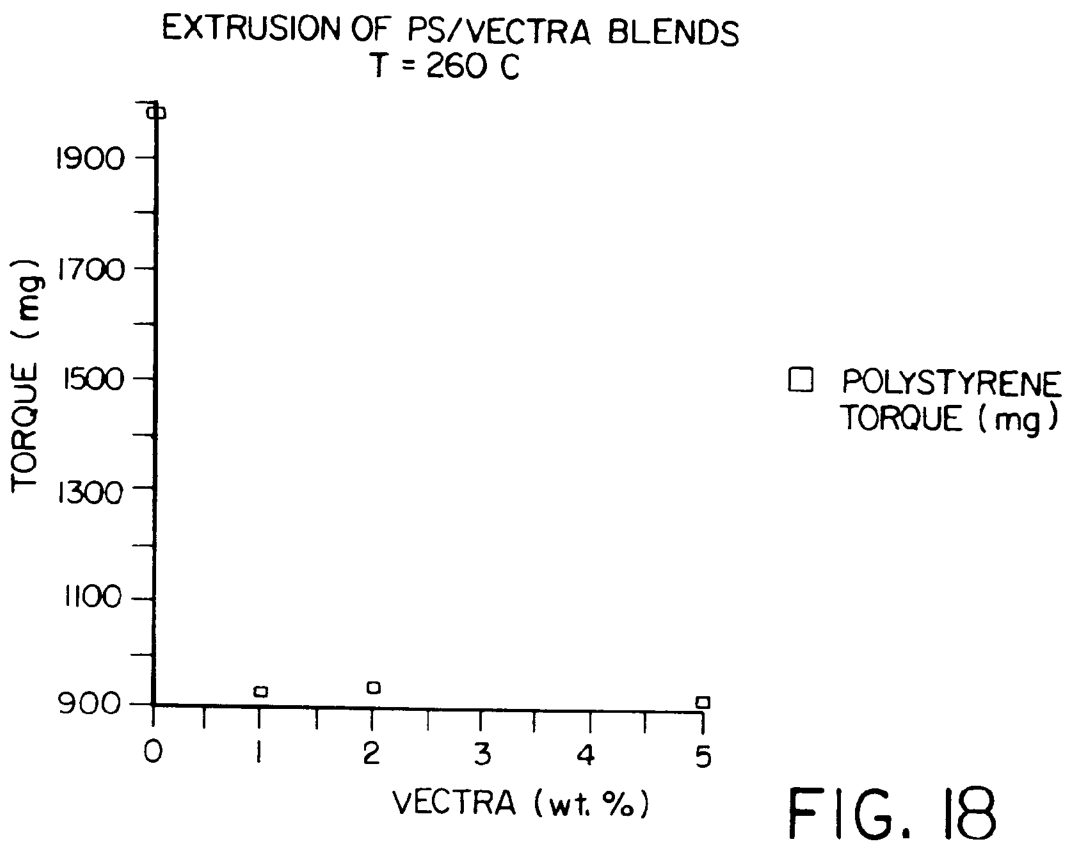
EXTRUSION OF PS/VECTRA BLENDS
T = 260 C
TORQUE (mg)
1900
1700
1500
1300
1100
900
0
1
2
3
4
5
VECTRA (wt. %)
POLYSTYRENE TORQUE (mg)

FIG. 18